Europäisches Patentamt

European Patent Office

Office européen des brevets

(19)

(11) Veröffentlichungsnummer : **0 230 875 B1**

(12) **EUROPÄISCHE PATENTSCHRIFT**

(45) Veröffentlichungstag der Patentschrift :
03.04.91 Patentblatt 91/14

(51) Int. Cl.$^5$ : **F24F 3/16**, B01D 53/02,
A62B 23/00

(21) Anmeldenummer : 87100106.1

(22) Anmeldetag : 07.01.87

(54) Vorrichtung zur Reinigung von Atemluft.

(30) Priorität : 10.01.86 DE 3600462
17.04.86 DE 3612932
03.05.86 DE 3615051
20.06.86 DE 3620666
25.10.86 DE 3636451

(43) Veröffentlichungstag der Anmeldung :
05.08.87 Patentblatt 87/32

(45) Bekanntmachung des Hinweises auf die
Patenterteilung :
03.04.91 Patentblatt 91/14

(84) Benannte Vertragsstaaten :
CH DE ES FR GB IT LI NL SE

(56) Entgegenhaltungen :
DE-A- 3 003 413
FR-A- 2 142 664
GB-A- 961 260
US-A- 3 502 429

(73) Patentinhaber : Hölter, Heinz, Dipl.-Ing.
Beisenstrasse 39-41
W-4390 Gladbeck (DE)

(72) Erfinder : Hölter, Heinz
Beisenstrasse 39-41
W-4390 Gladbeck (DE)
Erfinder : Igelbüscher, Heinrich
Marcq-en-Baroeul-Strasse 60
W-4390 Gladbeck (DE)
Erfinder : Gresch, Heinrich
Franz-Lehár-Strasse 25
W-4600 Dortmund-Wickede (DE)
Erfinder : Dewert, Heribert
Bahnhofstrasse 23
W-4390 Gladbeck (DE)

(74) Vertreter : Spalthoff, Adolf, Dipl.-Ing.
Pelmanstrasse 31 Postfach 34 02 20
W-4300 Essen 1 (DE)

## Beschreibung

Die Erfindung betrifft eine Vorrichtung zur Reinigung von Atemluft nach dem Oberbegriff des Patentanspruchs 1 bzw. des Patentanspruchs 7.

Es ist bekannt, daß bettlägerige Patienten vielfach Geruchsbelästigungen für die Umwelt verursachen. Teilweise werden mit der Geruchsbelästigung auch Bakterien freigesetzt. Es gibt Geräte, die unmittelbar unter einer Bettdecke angeordnet werden, um die Geruchsbelästigung zu beseitigen. Um Gerüche zu beseitigen und gleichzeitig Bakterien zu töten, werden vielfach UV-Röhren eingesetzt und sehr aufwendige, teure Filteranlagen gebaut.

Aus der DE-A-30 03 413 sind ein Verfahren und eine Vorrichtung zur Herstellung von sauberer Luft in Wohnräumen bekannt, bei denen die zu reinigende Luft über eine Staubfilterschicht geführt wird, hinter der ein Lüfter angeordnet ist. Dieser fördert die angesaugte Luft weiter über eine Trocknungsschicht und eine Heizvorrichtung. Dieser nachgeordnet ist ein Chemisorptionsfilter und eine Katalysatorschicht, der wiederum eine Trocknungsschicht nachgesetzt ist. Zwischen der Staubfilterschicht und dem Ventilator sowie zwischen der Heizvorrichtung und dem Chemisorptionsfilter ist jeweils eine Klappensteuerung vorgesehen, um die durch das Gerät geförderte Luft ggf. ohne Beaufschlagung des Chemisorptionsfilters hindurchströmen zu lassen. Als Stoffe für den Chemisorptionsfilter können Aktiv-Kohle und/oder Calciumchlorid und/oder Natronkalk Verwendung finden. Hierbei kann der verwendete Chemisorptionsfilter aufeinanderfolgende Schichten mit chemisorptiven Stoffen aufweisen, wobei diese Schichten jeweils von ihrer stofflichen Zusammensetzung her einander gleichen. Eine bestimmte Reihenfolge unterschiedlich aufgebauter chemisorptiver Schichten ist bei den im Falle der aus der DE-A-30 03 413 bekannten Vorrichtung verwendeten Chemisorptionsfiltern nicht vorgesehen.

Mit den bekannten Vorrichtungen konnte behandelte Luft bei hohen Schadstoffbelastungen nur dann in der erforderlichen Qualität, d.h. mit der gewünschten Reinheit, zur Verfügung gestellt werden, wenn die Vorrichtungen vergleichsweise aufwendig und kompliziert aufgebaut waren, beispielsweise mehrstufig ausgebildet oder mit UV-Röhren versehen waren.

Die häufig bei in Operationssälen zur Keimfreihaltung der Luft aufgehängten Decken verwendeten UV-Röhren haben die nachteilige Wirkung, daß von dem keimtötenden UV-Licht gleichzeitig radikaler Sauerstoff gebildet wird. Dieser radikale Sauerstoff ist hochreagibel und kann unerwünschte und gefährliche Verbindungen erzeugen, z.B. NO2.

Der Erfindung liegt die Aufgabe zugrunde, eine Vorrichtung zur Reinigung von Atemluft zu schaffen, bei der mit einfachen Mitteln Gerüche, Bakterien etc. beseitigt werden können.

Diese Aufgabe wird erfindungsgemäß durch eine Vorrichtung zur Reinigung von Atemluft gelöst, bei der neben den Merkmalen des Oberbegriffs des Patentanspruchs 1 bzw. des Patentanspruchs 7 auch die im kennzeichnenden Teil des Patentanspruchs 1 bzw. des Patentanspruchs 7 aufgeführten Merkmale verwirklicht sind. Die Wechselwirkung aufeinanderfolgender saurer und alkalischer chemisorptiver Schichten ergibt eine enorm hohe Geruchsbeseitigung und bewirkt gleichzeitig eine Verminderung der Bakterienbelastung der behandelten Luft. Durch die erfindungsgemäße Aufeinanderfolge der einzelnen chemisorptiven Schichten werden somit nicht nur die geruchsintensiven sauren Schadstoffe absorbiert, sondern auch Bakterien abgetötet. Durch die neutralisierende Schicht aus Aktivkohle ist gewährleistet, daß die Luftfeuchteteilchen in der behandelten Luft nicht zu alkalisch und nicht zu sauer in die Atemluft übergeben werden. Die gemäß Patentanspruch 7 oder 6 hinter der neutralisierenden Schicht aus Aktivkohle vorgesehene feinstaubabscheidende Schicht reinigt die Luft vollständig. Die im Falle des Patentanspruchs 7 vorgesehene erste, alkalische Schicht kann aus Natronkalk und/oder aus getränkten Blähstoffen bestehen. Als Blähstoff kann Calcium-Aluminiumsilikat, Perlite oder ein ähnlicher poröser Schüttstoff mit hohem Kapillarvermögen dienen, wobei auch mehrere unterschiedliche Blähstoffe eingesetzt werden können. Als Tränkmittel können Natrium-Kaliumcarbonat-Lösung oder Raseneisenerz (ca. 80% Eisen-III-Hydroxyd) oder beide verwendet werden.

Die vorstehend geschilderte Schichtenanordnung ist sehr effektiv bei der Beseitigung von Fäkalgerüchen und von Tabakrauch und bei der Abtötung von Bazillen, Keimen, Pollen und Pilzen ; vorteilhaft können gemäß Patentanspruch 2 die einzelnen chemisorptiven Schichten durch Vliesfilter voneinander abgetrennt sein, wobei auf der Saug- und gemäß Patentanspruch 3 auf der Ausblasseite zur Abgrenzung gegen den ansaug- oder ausblasseitigen Freiraum Vliesfilter angebracht sind.

Sofern bei der erfindungsgemäßen Vorrichtung u.a. Ozonisierung und/oder Ionisierung zur Unschädlichmachung von Bazillen, Viren, Pilzen und Keimen genutzt werden, wobei die Ionisierung eine zusätzliche Agglomeration von Aerosol-Teilchen und Staubteilchen erbringt, kann die zu reinigende Atemluft gemäß Patentanspruch 4 vor Beaufschlagung des Chemisorptionsfilters über eine sterilisierende Bestrahlungsstrecke geführt werden, so daß etwaig durchgerissene Ozonphasenstränge, die sich nachteilig auf Mensch und Tier auswirken können, im Chemisorptionsfilter neutralisiert werden können.

Der erfindungsgemäß aufgebaute Chemisorptionsfilter kann saug- oder druckseitig zum Ventilator angeordnet sein ; der Ventilator kann auch gemäß Patentanspruch 5 vorteilhaft zwischen dem geteilten Chemisorptionsfilter sitzen, so daß die einzelnen Filterteile dann auch zur Schall-dämpfung dienen können. Zur Grobabscheidung unerwünscht großkörniger Partikel kann gemäß Patentanspruch 8 ein Grobabscheider vor der Ozonisierungsstrecke angeordnet sein.

Um cancerogene Stoffe, wie Dioxin, Furan, Formaldehyd, PAH, Benzpyren ud.dgl. abzuscheiden, kann der Chemisorptionsfilter gemäß Patentanspruch 9 eine Schicht aus mit Propylenglykol getränkten Perliten oder anderen Blähstoffen aufweisen.

Weiterhin kann, sofern cancerogene Stoffe und Tabakrauch gleichzeitig in bedeutendem Ausmaß vorhanden sind, der Chemisorptionsfilter gemäß Patentanspruch 10 eine weitere Schicht aus mit einer medizinischen Seifenlösung getränkten Blähstoffen aufweisen.

Im folgenden wird die Erfindung an Hand von Ausführungsbeispielen unter Bezugnahme auf die Zeichnungen näher erläutert ;

Es zeigen :

Figur 1 die Ansicht einer als kofferartiges Reinigungsgerät ausgestalteten erfindungsgemäßen Vorrichtung ;

Figur 2. eine als Chemisorptionsdecke eines Raums ausgestaltete erfindungsgemäße Vorrichtung und

Figur 3 eine geschnittene Darstellung einer weiteren als kofferartiges Reinigungsgerät ausgestalteten erfindungsgemäßen Vorrichtung.

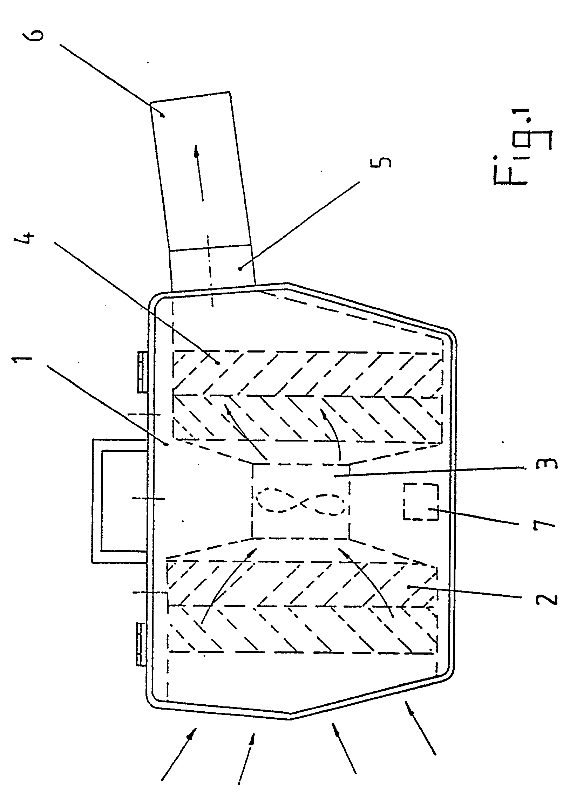

Figur 1 zeigt ein kofferartiges Reinigungsgerät 1, in dem ein zweigeteilter Chemisorptionsfilter 2, 4 angeordnet ist. Das Chemisorptionsfilterteil 2 ist als Massenpaket ausgebildet und auf der Saugseite eines Ventilators 3 angeordnet. Das Chemisorptionsfilterteil 4 ist ebenfalls als Massenpaket ausgebildet und auf der Druckseite des Ventilators 3 angeordnet. An der Ausblasseite 5 des kofferartigen Reinigungsgeräts 1 ist ein Blasschlauch 6 und im kofferartigen Reinigungsgerät 1 ist eine elektrische Überwachungs- und Steuereinrichtung 7 vorgesehen.

Zur Geräuschminderung ist der Ventilator 3 zwischen den beiden Chemisorptionsfilterteilen 2, 4 eingeklemmt, so daß die als Massenpakete ausgebildeten Chemisorptionsfilterteile 2, 4 sowohl zur Geruchs- und Bakterienbeseitigung als auch zur saug- und druckseitigen Schalldämpfung dienen.

Die Chemisorptionsfilterteile 2, 4 bestehen aus mehreren Schichten, nämlich einer ersten Schicht aus Natronkalk, einer zweiten Schicht aus Blähstoffen mit hohem Kapillarverhältnis, wobei diese Blähstoffe mit ein- oder mehrbasischen Carbonsäuren getränkt sind, einer dritten Schicht aus Blähstoffen mit hohem Kapillaranteil, wobei diese Blähstoffe mit alkalischer Eisen-III-Hydroxydlösung (Fe(OH)3) getränkt sind, und einer vierten Schicht aus Aktivkohle.

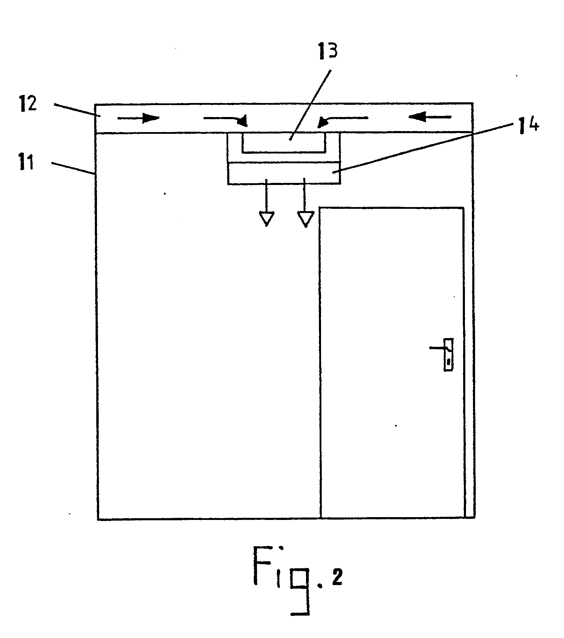

In Figur 2 ist ein Raum 11 mit einer oberen Decke 12 dargestellt. An der oberen Decke 12 sitzt eine sterilisierende Lampen- bzw. Bestrahlungsstrecke 13, der ein diese unterhangender Chemisorptionsfilter 14 folgt, dem wiederum ein Hochleistungs-Schwebstoffilter nachgeschaltet ist.

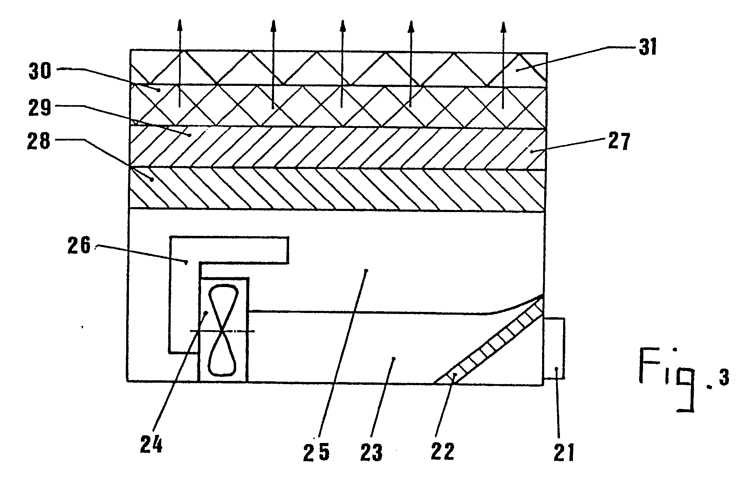

Das in Figur 3 dargestellte kofferartige Reinigungsgerät hat einen Ansaugstutzen 21, einen Grobabscheidefilter 22 und eine Ozonisierungsstrecke 23, die einem Ventilator 24 vorgeschaltet ist. Durch die Anordnung der Ozonisierungsstrecke 23 vor dem Ventilator 24 erfolgt eine intensive Kontaktierung des Ozons im Ventilator 24. Auf der Ausblasseite des Ventilators 24 ist in einem durchströmten Raum 25 zusätzlich eine Ionisierungsstrecke 26 vorgesehen ; in diesem Bereich findet eine Agglomeration der Bazillen, Keime, Pilze, Viren usw., die vorher durch die Ozonisierung in der Ozonisierungsstrecke 23 abgetötet worden sind, mit Staubteilchen statt. Die agglomerierten, d.h. vergrößerten, Partikel werden in einem nachgesetzten Chemisorptionsfilter 27 mit größtmöglichem Effekt steril eingebunden. Der Chemisorptionsfilter 27 ist nicht nur zur Abscheidung der Bakterien, Pilze, Viren und Stäube ausgelegt, sondern hat gleichzeitig eine Sicherheitsfunktion zu erfüllen, nämlich durchgerissene Ozonphasenstränge zu neutralisieren.

Hierzu weist der Chemisorptionsfilter 27 Schichten aus Aktivkohle, Natronkalk und Eisen-II- und/oder Eisen-III-Salz und/oder Raseneisenerz, vorzugsweise in einer konzentration von 80% (Fe(OH)3), auf, die der Ozonisierungsstrecke 23 und der Ionisierungsstrecke 26 nachgeschaltet sind. Die Reihenfolge der Schichten des Chemisorptionsfilters 27 ist wie folgt :

1. eine erste, alkalische Schicht 28 mit einem pH-Wert zwischen 11 und 12 aus Raseneisenerz, mit Natrium-Kaliumcarbonat getränkten Perliten oder Natronkalk ;

2. eine zweite, saure Schicht 29 mit einem pH-Wert zwischen 1 und 2 aus Blähstoffen, vorzugsweise aus geblähtem Calcium-Aluminiumsilikat und/oder Perliten, die mit Eisen-III-Salzen, Eisen-II-Salzen und/oder Eisenammoniumsulfat getränkt sind ;

3. eine dritte, neutralisierende Schicht 30 aus Aktivkohle, die als neutrale Schüttbettmasse vorliegt.

Der dritten Schicht 30 ist eine vierte, feinstaubabweisende Schicht 31 nachgeschaltet, die als Hochleistungs-Schwebstoff-filter gegen Feinstäube wirkt.

## Ansprüche

1. Vorrichtung zur Reinigung von Atemluft, welche mit einem Chemisorptionsfilter (2, 4) und einem Ventilator (3) ausgerüstet ist, wobei der Chemisorptionsfilter (2, 4) Schichten aus alkalischen, sauren und neutralen Stoffen aufweist, dadurch gekennzeichnet, daß in Strömungsrichtung der zu reinigenden Atemluft der Chemisorptionsfilter (2, 4) folgende Schichtung aufweist:

a) eine erste Schicht aus Natronkalk,

b) eine zweite Schicht aus Blähstoffen mit hohem Kapillarverhältnis, welche mit ein- oder mehrbasischen Carbonsäuren getränkt sind,

c) eine dritte Schicht aus Blähstoffen mit hohem Kapillarverhältnis, welche mit alkalischer Eisen-III-Hydroxyd-Lösung (Fe(OH)3) getränkt sind und

d) eine vierte Schicht aus Aktivkohle.

2. Vorrichtung nach Anspruch 1, dadurch gekennzeichnet, daß die erste, zweite, dritte und vierte Schicht durch Vliesfilter voneinander getrennt sind.

3. Vorrichtung nach Anspruch 1 oder 2, dadurch gekennzeichnet, daß die vierte Schicht aus Aktivkohle auf der Ausblasseite (5) durch einen Vliesfilter begrenzt ist.

4. Vorrichtung nach einem der vorhergehenden Ansprüche, dadurch gekennzeichnet, daß, in Strömungsrichtung der zu reinigenden Atemluft gesehen, vor dem Chemisorptionsfilter (14) eine sterilisierende Bestrahlungsstrecke (13) angeordnet ist.

5. Vorrichtung nach einem der vorhergehenden Ansprüche, dadurch gekennzeichnet, daß der Chemisorptionsfilter in zwei Teile (2, 4) geteilt ist, zwischen denen der Ventilator (3) vorgesehen ist.

6. Vorrichtung nach einem der vorhergehenden Ansprüche, dadurch gekennzeichnet, daß der vierten Schicht aus Aktivkohle ein Hochleistungs-Schwebstoffilter nachgeordnet ist.

7. Vorrichtung zur Reinigung von Atemluft, welche mit einem Chemisorptionsfilter (27) und einem Ventilator (24) ausgerüstet ist, wobei der Chemisorptionsfilter (27) Schichten aus alkalischen, sauren und neutralen Stoffen aufweist, dadurch gekennzeichnet, daß der Chemisorptionsfilter (27) folgende Schichtung aufweist:

eine erste, alkalische Schicht (28), deren Stoffe in einem pH-Wert-Bereich von 11-12 liegen,

eine nachfolgende zweite, saure Schicht (29) aus Blähstoffen mit hohem Kapillarverhältnis, welche mit Eisen-III-Salzen, Eisen-II-Salzen, Eisenammoniumsulfat oder einer Kombination aus diesen Stoffen getränkt sind, die in einem pH-Wert-Bereich von 1-2 liegen,

eine dritte, neutralisierende Schicht (30) aus Aktivkohle, und

eine vierte, feinstaubabscheidende Schicht (31).

8. Vorrichtung nach einem der vorhergehenden Ansprüche, dadurch gekennzeichnet, daß an ihrer Eingangsseite ein Grobabscheidefilter (22) vorhanden ist, dem eine Ozonisierungsstrecke (23) sowie der Ventilator (24) nachgeschaltet sind, an den sich eine Ionisierungsstrecke (26) anschließt, der der Chemisorptionsfilter (27) nachgeordnet ist.

9. Vorrichtung nach einem der vorhergehenden Ansprüche, dadurch gekennzeichnet, daß der Chemisorptionsfilter (27) eine Schicht aus Blähstoffen, vorzugsweise Perliten, die angefeuchtet und mit Propylenglykol getränkt sind, besitzt.

10. Vorrichtung nach Anspruch 9, dadurch gekennzeichnet, daß hinter der mit Propylenglykol getränkten Schicht eine weitere Schicht aus Blähstoffen angeordnet ist, die mit einer medizinischen Seifenlösung getränkt sind.

## Claims

1. Apparatus for purifying respiratory air which is equipped with a chemical sorption filter (2, 4) and a ventilator (3), the chemical sorption filter (2, 4) comprising layers of alkaline, acid and neutral substances, characterized in that in the flow direction of the respiratory air to be purified the chemical sorption filter (2, 4) comprises the following layer arrangement:

a) a first layer of soda lime;

b) a second layer of expanding substances with a high capillary rate which are impregnated with monobasic or polybasic carboxylic acids;

c) a third layer of expanding substances with a high capillary rate which are impregnated with alkaline iron-III-hydroxide solution (Fe(OH)3); and

d) a fourth layer of activated carbon.

2. Apparatus according to Claim 1, characterized in that the first, second, third and fourth layers are separated from one another by a non-woven filter.

3. Apparatus according to Claim 1 or 2, characterized in that the fourth layer of the activated carbon is limited on the exhaust side (5) by a non-woven filter.

4. Apparatus according to any one of the preceding claims, characterized in that, viewed in the flow direction of the respiratory air to be purified, a sterilizing radiation section (13) is disposed in front of the chemical sorption filter (14).

5. Apparatus according to any one of the preceding claims, characterized in that the chemical sorption filter is divided into two parts (2, 4) between which the ventilator (3) is provided.

6. Apparatus according to any one of the preceding claims, characterized in that a high-performance suspended-matter filter is disposed after the fourth layer of activated carbon.

7. Apparatus for purifying respiratory air which is equipped with a chemical sorption filter (27) and a ventilator (24), the chemical sorption filter (27) comprising layers of alkaline, acid and neutral substances, characterized in that the chemical sorption filter (27) comprises the following layer arrangement:

– a first, alkaline layer (28) of which the substances are in a pH value range of 11 to 12;

– a subsequent second, acid layer (29) of expanded substances with a high capillary rate which are impregnated with ferric salts, ferrous salts, ammonium iron sulphate or a combination of these substances which are in a pH value range of 1 to 2 ;

– a third, neutralizing layer (30) of activated carbon ; and

– a fourth fine dust collecting layer (31).

8. Apparatus according to any one of the preceding claims, characterized in that on the input side thereof there is disposed a coarse separating filter (22) after which there are arranged an ozonization section (23) as well as the ventilator (24), followed by an ionization section (26) after which the chemical sorption filter (27) is arranged.

9. Apparatus according to any one of the preceding claims, characterized in that the chemical sorption filter (27) comprises a layer of expanded substances, preferably perlites, which are moistened and impregnated with propylene glycol.

10. Apparatus according to Claim 9, characterized in that behind the layer impregnated with propylene glycol there is disposed a further layer of expanded substances which are impregnated with a medicated soap solution.

**Revendications**

1. Dispositif pour la purification d'air de respiration, qui est muni d'un filtre à chimisorption (2, 4) et d'un ventilateur (3), le filtre à chimisorption (2, 4) présentant des couches constituées de produits alcalins, acides et neutres, caractérisé en ce que le filtre à chimisorption (2, 4) présente, dans le sens d'écoulement de l'air de respiration à purifier, la succession de couches suivante :

a) une première couche constituée de chaux sodée,

b) une deuxième couche constituée de produits expansés à capillarité élevée, qui sont imprégnés d'acides mono- ou polycarboxyliques,

c) une troisième couche constituée de produits expansés à capillarité élevée, qui sont imprégnés d'une solution alcaline d'hydroxyde de fer III (Fe(OH)3), et

d) une quatrième couche constituée de charbon actif.

2. Dispositif selon la revendication 1, caractérisé en ce que les première, deuxième, troisième et quatrième couches sont séparées l'une de l'autre par des filtres en nappe de fibres.

3. Dispositif selon la revendication 1 ou 2, caractérisé en ce que la quatrième couche constituée de charbon actif est délimitée, du côté sortie (5), par un filtre en nappe de fibres.

4. Dispositif selon l'une des revendications précédentes, caractérisé en ce qu'il est disposé, avant le filtre à chimisorption (14), une zone d'exposition aux rayons (13) pour la stérilisation, les choses étant vues dans le sens d'écoulement de l'air de respiration à purifier.

5. Dispositif selon l'une des revendications précédentes, caractérisé en ce que le filtre à chimisorption est divisé en deux parties (2, 4), entre lesquelles est prévu le ventilateur (3).

6. Dispositif selon l'une des revendications précédentes, caractérisé en ce qu'il est disposé, à la suite de la quatrième couche constituée de charbon actif, un filtre pour les produits en suspension, à grand rendement.

7. Dispositif pour la purification d'air de respiration, qui est muni d'un filtre à chimisorption (27) et d'un ventilateur (24), le filtre à chimisorption (27) présentant des couches constituées de produits alcalins, acides et neutres, caractérisé en ce que le filtre à chimisorption (27) présente la succession de couches suivante :

une première couche (28), alcaline, dont les produits ont une valeur de pH située dans la zone de 11 à 12,

une deuxième couche (29) faisant suite, acide, constituée de produits expansés à capillarité élevée, qui sont imprégnés de sels de fer III, de sels de fer II, de sulfate de fer et d'ammonium ou d'une combinaison de ces produits, qui présentent une valeur de pH située dans la zone de 1 à 2,

une troisième couche (30), neutralisante, constituée de charbon actif, et

une quatrième couche (31), séparant les fines poussières.

8. Dispositif selon l'une des revendications précédentes, caractérisé en ce qu'il existe, à son entrée, un filtre (22) pour une séparation grossière, à la suite duquel sont disposés une zone d'ozonisation (23) et le ventilateur (24), auquel fait suite une zone d'ionisation (26), à la suite de laquelle est disposé le filtre à chimisorption (27).

9. Dispositif selon l'une des revendications précédentes, caractérisé en ce que le filtre à chimisorption (27) possède une couche constituée de produits expansés, de préférence de perlites, qui sont mouillés et imprégnés de propylèneglycol.

10. Dispositif selon la revendication 9, caractérisé en ce qu'il est disposé, après la couche imprégnée de propylèneglycol, une autre couche constituée de produits expansés qui sont imprégnés d'une solution de savon médicinale.

Fig.1

Fig. 2

Fig. 3

EP 0 230 875 B1